# EUROPEAN PATENT SPECIFICATION

(11) **EP 1 467 560 B1**
(45) Date of publication and mention of the grant of the patent: **15.05.2013**
(21) Application number: 04008623.3
(22) Date of filing: 08.04.2004
(51) Int. Cl.: H04N 5/76, H04N 7/16

(54) **Virtual channel preview guide**
Programmführer mit Vorschau virtueller Kanäle
Guide électronique de prévisualisation de canaux virtuels

(30) Priority: 11.04.2003 US 412560
(43) Date of publication of application: 13.10.2004
(73) Proprietor: MICROSOFT CORPORATION, Redmond, Washington 98052-6399 (US)
(72) Inventor: Barrett, Peter T., San Francisco CA 94117 (US)
(74) Representative: Goddar, Heinz J.

(56) References cited:
- EP-A2- 1 289 297
- WO-A-00/40021
- WO-A-96/41477
- WO-A1-02/102079
- US-A- 5 534 911
- US-A- 5 544 354
- US-A1- 2002 038 358
- US-A1- 2002 059 649

## Description

### TECHNICAL FIELD

This invention relates to recorded program content and, in particular, to a virtual channel preview guide for recorded broadcast programs and on-demand programs and content.

### BACKGROUND

A client device in a television-based system, such as a set-top box or a digital video recorder, can receive video content from a program distributor in the form of video on-demand movies and programs, and in the form of broadcast programs which include news shows, sitcoms, movies, commercials, and any other form of television-based entertainment and information. A client device that includes a hard disk memory can be utilized to record the video on-demand and broadcast programs of interest to a viewer.

The recorded broadcast programs maintained with a hard disk memory in a client device, as well as the video on-demand programs which may also be recorded or available from a program provider, are typically accessible via user interfaces at the client device that lists the recorded or video on-demand programs for selection by the viewer. A scroll list of available recorded or video on-demand programs only provides a list of the programs and does not provide an intuitive, user-friendly interface to determine which of the many programs may be of interest to the viewer. Further, a scroll list of the recorded or video on-demand programs only provides limited program information, such as the program name.

Accordingly, for television-based entertainment and information systems that are implemented to record video on-demand and broadcast programs, as well as provide a user interface for selecting recorded broadcast and/or video on-demand programs, there is a need for an informative and user-friendly user interface.

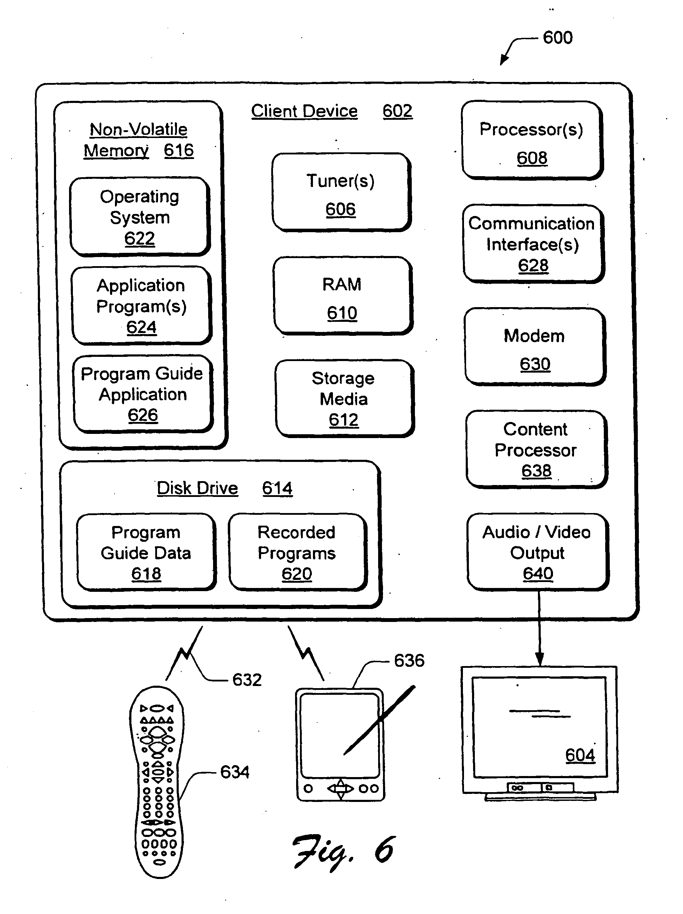

US 2002/0059649 is the closest prior art with respect to the subject-matter of claims 1, 17 and 28 and discloses a program guide comprising virtual channels consisting of recorded programs organised into categories (figure 6, paragraphs 81 to 91). A preview ("typical scene", still or moving picture) of a selected program is displayed on top of the grid.

US 5 534 911 discloses a personal channel including already recorded programs and on-demand programs which are selected and scheduled according to a user profile. A preview (col. 3, lines 52-57) of the program selection is available.

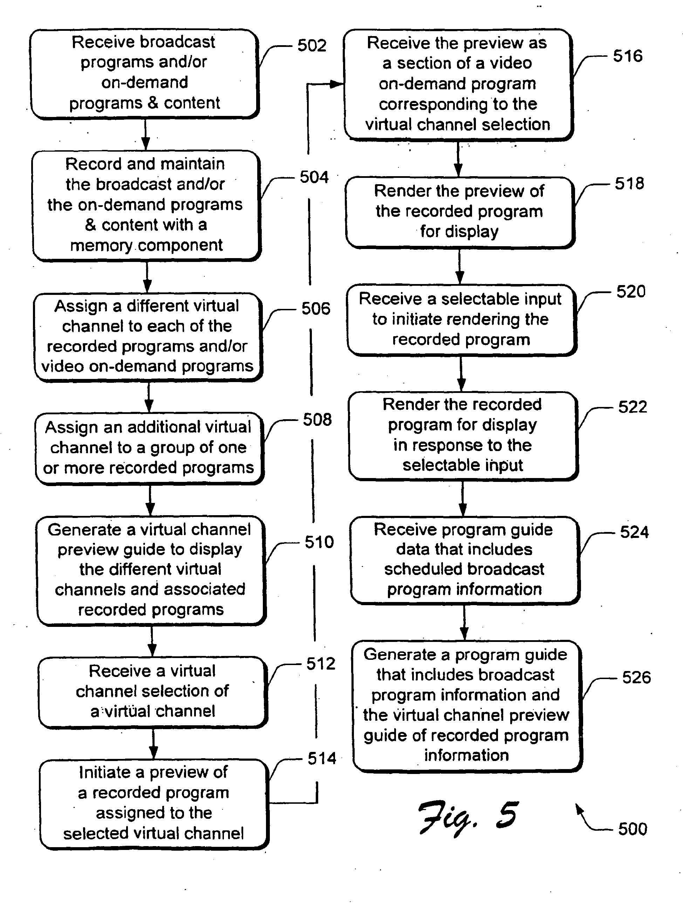

WO 02/102079 D3 discloses markers for sections of a preview of single recorded program (page 54, lines 22 to 26; page 69, lines 9 to 16; figure 5).

US 2002/038358 discloses a replay guide in which virtual channels are restricted to a single recorded program (figure 19B and paragraphs 104 and 186).

EP 1 289 297 discloses an automatic preview button for displaying sequentially preview programs of a specific category (figure 37B, paragraphs 209 to 211).

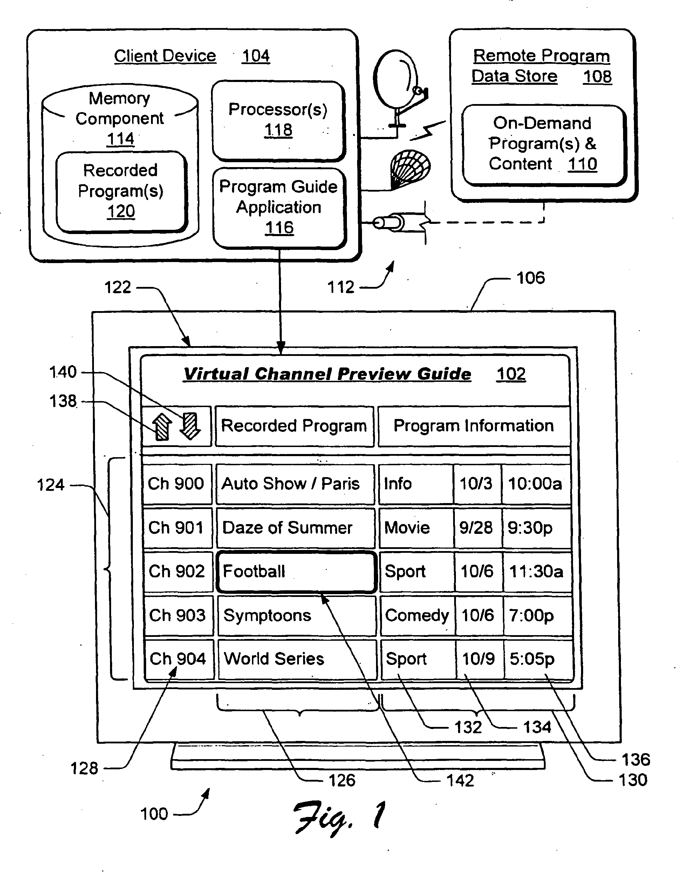

US 5 544 354 discloses a user interface comprising cells for navigating through stored content and a preview cell for sequentially displaying previews of a specific category (column 13, lines 13 to 28; column 14, lines 25 to 33; figures 1D, 1E).

### SUMMARY

A virtual channel preview guide is described herein.

In an implementation, a different virtual channel is associated with each of one or more recorded programs. A virtual channel preview guide is generated to display the different virtual channels and the associated recorded programs. In an event that a virtual channel is selected, a preview of a recorded program associated with the virtual channel is initiated.

In another implementation, a virtual channel preview guide includes program identifiers that each correspond to a recorded program, and includes virtual channel identifiers that are each associated with a different program identifier. The virtual channel preview guide also includes a selectable control, such as a program identifier or a virtual channel identifier, that can be selected to initiate a preview of a recorded program. The virtual channel preview guide includes a preview display to display the preview of the recorded program.

### BRIEF DESCRIPTION OF THE DRAWINGS

The same numbers are used throughout the drawings to reference like features and components.
Fig. 1 illustrates various components of an exemplary system to implement a virtual channel preview guide.
Fig. 2 illustrates an example of a program preview initiated from a virtual channel preview guide.
Fig. 3 illustrates an exemplary program guide that includes a section of a virtual channel preview guide.
Fig. 4 illustrates an exemplary section of a virtual channel preview guide.
Fig. 5 is a flow diagram that illustrates an exemplary method for a virtual channel preview guide.
Fig. 6 illustrates various components of an exemplary client device implemented in a television-based system.
Fig. 7 illustrates an exemplary system architecture in which a virtual channel preview guide can be implemented.
Fig. 8 illustrates an exemplary broadcast video distribution architecture in which a virtual channel preview guide can be implemented.
Fig. 9 further illustrates components of the exemplary broadcast video distribution architecture shown in Fig. 8.

### DETAILED DESCRIPTION

Television viewing is increasingly "on-demand" and the use of digital video recorders, personal video recorders, and video on-demand program playback systems are shifting viewing habits from having to watch broadcast programs at programming times scheduled by a provider of the programs to being able to watch pre-recorded broadcast and/or on-demand programs and content at a time convenient for a viewer. In an implementation of a virtual channel preview guide, recorded programs, to include recorded broadcast programs, recorded video on-demand programs, and any other type of recorded on-demand content, are displayed in the virtual channel preview guide that is an intuitive and user-friendly interface to preview the many available recorded programs and content. Selecting a virtual channel, or an associated recorded program identifier, initiates a preview of the recorded program so that a viewer can determine whether to initiate rendering the recorded program for viewing.

The following discussion is directed to television-based entertainment and information systems, such as a two-way unicast network, interactive television networks, cable networks, and Web-enabled television networks. Client devices in such systems range from full-resource clients with substantial memory and processing resources, such as television-enabled personal computers and television recorders equipped with hard-disks, to low-resource clients with limited memory and/or processing resources, such as traditional set-top boxes that are also implemented to record broadcast programs. While aspects of the described systems and methods can be used in any of these systems and for any types of client devices, they are described in the context of the following exemplary environment.

Fig. 1 illustrates various components of an exemplary virtual channel preview guide system 100 to implement a virtual channel preview guide 102. System 100 includes a client device 104, a display device 106, and a remote program data store 108 (e.g., memory component(s) not integrated with client device 104). The remote program data store 108 maintains on-demand programs and/or content 110, such as video on-demand movies. The on-demand programs and/or content 110 can include any programs and content that is accessible by the client device 104, such as via a point-to-point network. Client device 104 receives broadcast program content and/or the on-demand program(s) and content 110 via various transmission media 112, such as satellite transmission, radio frequency transmission, cable transmission, and/or via any number of other transmission media.

Client device 104 can receive the broadcast program content and/or the on-demand programs and content from a headend in a television-based content distribution system, for example, that provides the broadcast and on-demand programs as well as program guide data to multiple client devices. Client device 104 can be implemented in any number of embodiments, such as a set-top box, a digital video recorder (DVR) and playback system, and as any other type of client device that may be implemented in a television-based entertainment and information system.

In this example, client device 104 includes a memory component 114, a program guide application 116, and one or more processors 118 (e.g., any of microprocessors, controllers, and the like) which process various instructions to control the operation of client device 104 and to communicate with other electronic and computing devices. Although not shown in this example, client device 104 may be implemented with any number and combination of differing components as further described below with reference to Fig. 6. Client device 104 receives programs as broadcast content and records the programs to be maintained with memory component 114 as recorded programs 120. Client device 104 can also receive the video on-demand program(s) and content 110 and record the programs to be maintained with memory component 114. Memory component 114 can be implemented as a disk drive, such as in a digital video recorder, for example.

As used herein, "programs" include news shows, sitcoms, comedies, movies, commercials, talk shows, sporting events, on-demand videos, and any other form of television-based entertainment and information. Further, "recorded programs" include any of the aforementioned "programs" that have been recorded and that are maintained with a memory component (e.g., memory component 114 in client device 104) as recorded programs 120, or that are maintained with a remote program data store (e.g., remote program data store 108) as on-demand programs and content 110. The "recorded programs" can also include any of the aforementioned "programs" that have been recorded and that are maintained at a broadcast center and/or at a headend that distributes the recorded programs to subscriber sites and client devices.

Program guide application 116 executes on processor(s) 118 and can be stored as computer-executable instructions in non-volatile memory (not shown) of client device 104. Program guide application 116 is implemented to generate the virtual channel preview guide 102 for display in a display region 122 of display device 106. Although program guide application 116 is illustrated and described as a single application configured to generate the virtual channel preview guide 102, program guide application 116 can be implemented as several component applications distributed to each perform one or more functions in a digital video recorder system and/or in any other client device in a television-based entertainment and information system.

Virtual channel preview guide 102 enables a viewer to navigate a program grid 124 and initiate a preview display of a recorded program (e.g., as used herein to reference an on-demand program or content 110 and/or a recorded program 120). The virtual channel preview guide 102 includes recorded program identifiers 126, associated virtual channel identifiers 128, and additional information 130 about respective recorded programs. Program guide application 116 also assigns, or otherwise associates, a different virtual channel (e.g., channels 900 through 1000 in this example) with each recorded program. Program guide application 116 can also determine the recorded program identifiers 126 from program data associated with the recorded programs. In this example, a recorded program identifier 126 is a program name, and an associated virtual channel identifier 128 is a virtual channel number.

The program guide application 116 can extract the recorded program identifiers 126 (e.g., the program names) and other associated program information 130 from program guide data that is received from a headend program data provider, for example. The program guide data can be embedded with received program content, or can be received as a separate broadcast. Similarly, the program guide application 116 can extract the program names 126 and other associated program information 130 for the on-demand programs and content 110 from the programs and content itself. The program names 126 and the other associated program information 130 can be received as embedded program content within the programs and associated content.

The additional information 130 about each respective recorded program can include a recorded program descriptor 132, a calendar date 134, and a time designator 136. Although only these three examples of additional recorded program information 130 are shown in this example, any combination and different types of additional information can be included in a virtual channel preview guide to further inform a viewer about the recorded programs. The recorded program descriptors 132 in this example are a program category that describes the genre of a recorded program and categorizes it as a particular program type. For example, a recorded program can be categorized as a movie, a comedy, a sporting event, a news program, a sitcom, a talk show, an informational program, or as any number of other category descriptions.

The calendar date 134 and time designator 136 corresponding to a recorded program identifies when the program was recorded, on which day and at what time, respectively. Although a calendar date 134 is shown to include only the month and a day of the month that a program was recorded, the calendar dates can also include a year designation (e.g., /02).

The on-demand programs and content 110 and the recorded programs 120 can be displayed in the virtual channel preview guide 102 in alphabetical order or in any other order (optionally user-selectable), such as by the program category 132, program recording date 134, and the like. In this example, the recorded program names 126 are listed in alphabetical order. Further, the recorded programs can be listed in the virtual channel preview guide 102 on a first-in, first-out basis such that each program consecutively recorded is associated with the next consecutive virtual channel number. When a recorded program 120 is deleted from memory component 114, or when a video on-demand program 110 is no longer available, program guide application 116 can update the virtual channel preview guide 102 to reflect that the recorded program has been deleted.

The recorded program names 126, virtual channel numbers 128, and associated information 130 about the on-demand programs and content 110 and recorded programs 120 are displayed and navigated in the virtual channel preview guide 102 as if the recorded programs were received via broadcast channels. Each recorded program corresponds to a virtual channel that may be "tuned" to render a preview display of the recorded program.

Virtual channel preview guide 102 includes a selectable control 138 that, when selected, scrolls the program grid 124 up to view recorded programs and information associated with virtual channel identifiers 128 lower than channel number nine-hundred (900). Similarly, a selectable control 140, when selected, scrolls the program grid 124 down to view recorded programs and information associated with virtual channel identifiers higher than channel number nine-hundred-four (904). Although the virtual channel identifiers 128 are shown as virtual channel numbers nine-hundred (900) through nine-hundred-four (904), any number of virtual channels can be assigned that each correspond to a video on-demand program 110 and/or recorded program 120.

Virtual channel preview guide 102 also includes a selectable control 142 shown implemented as an on-screen focus that can be positioned to identify a recorded program 126 and, when selected, client device 104 initiates a preview display of the associated video on-demand program 110 or recorded program 120. For example, selectable control 142 is positioned to identify a recorded "Football" sporting event. A channel change selection will initiate a preview display of the sporting event program on display device 106 for viewing. A viewer can move selectable control 142 within program grid 124 and generate a channel change selection by manipulating an input device, such as a remote control for example.

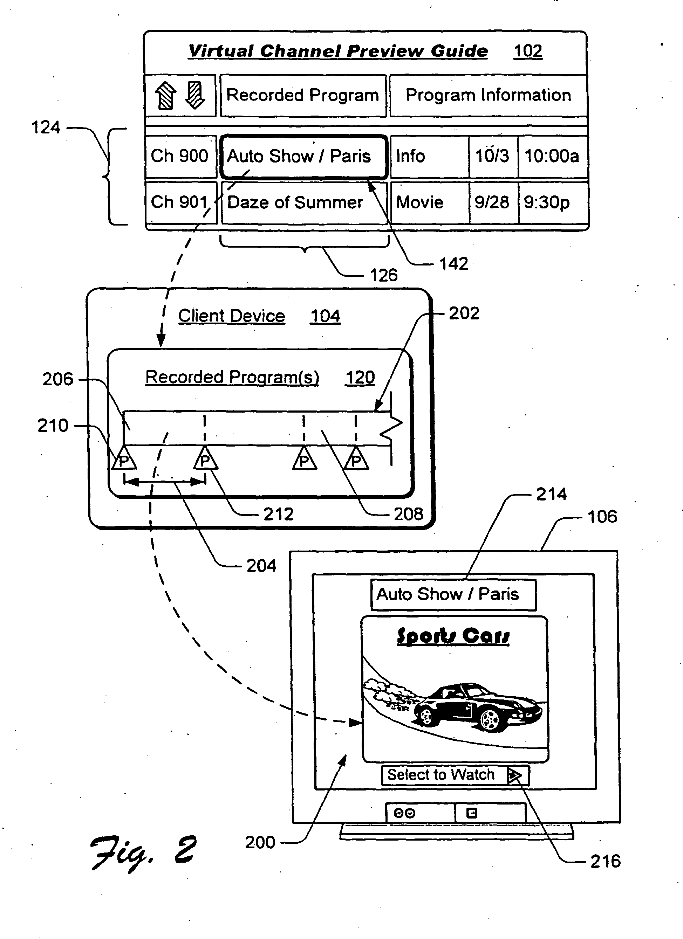

Fig. 2 illustrates an example of a program preview display 200 initiated with a virtual channel selection from the virtual channel preview guide 102. In the program grid 124 of virtual channel preview guide 102, the selectable control 142 is positioned to identify a recorded program 126 labeled "Auto Show/Paris". When a selectable control associated with the recorded program is selected, such as the recorded program identifier "Auto Show/Paris" or the associated virtual channel identifier "Ch 900", processor(s) 118 (Fig. 1) in client device 104 initiate preview display 200 of the recorded program on display device 106.

At client device 104, a recorded program 120 corresponding to the recorded program identifier 126 is maintained as digital program content 202. Preview display 200 can be initiated as a duration 204, such as a time duration or as any other measure of the digital program content 202. Further, preview display 200 can correspond to a beginning section 206 of the recorded program, to a designated section 208 of the recorded program, and/or to any number of sections of the recorded program (e.g., the digital program content 202). The digital program content 202 is designated with preview markers, such as preview marker 210 that designates the beginning of preview display 200 and a preview marker 212 that designates an end of the preview display. The preview markers can be implemented as metatags that are placed in the digital program content and interpreted by the client device to indicate the beginning and end of a preview.

The preview display 200 can include other associated recorded program information, such as a program identifier 214. Further, the preview display 200 includes a selectable control 216 that, when selected, initiates client device 104 rendering the recorded program 120 for viewing on display device 106.

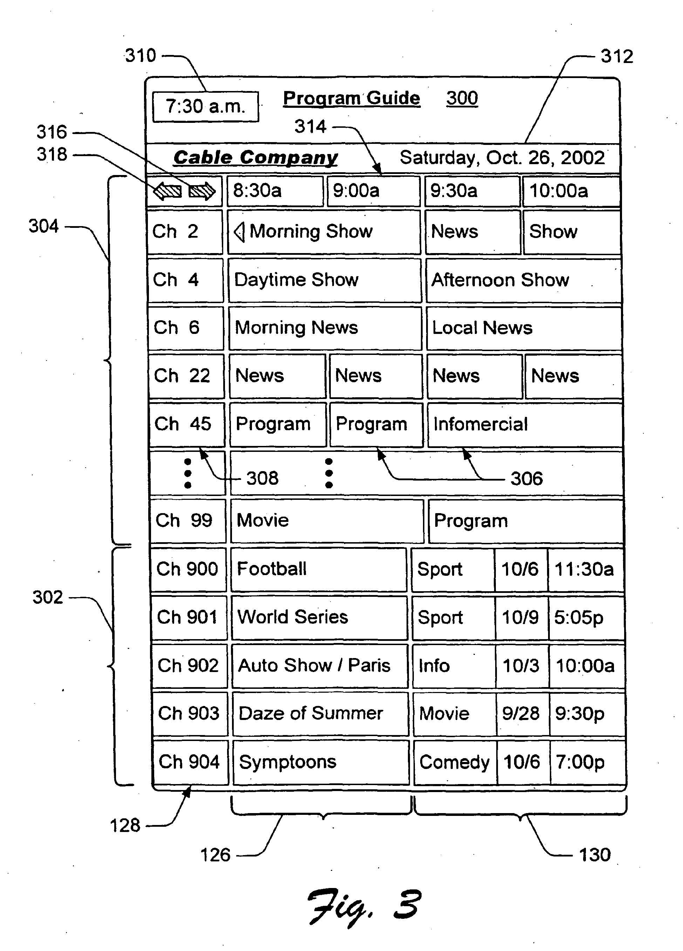

Fig. 3 illustrates an example of a program guide 300 that includes the exemplary virtual channel preview guide 102 shown in Fig. 1. Program guide 300 includes a program grid section 302 which displays the recorded program identifiers 126, the associated virtual channel identifiers 128, and the additional information 130 about respective recorded programs that are shown in the virtual channel preview guide 102. Program guide 300 also includes a program grid section 304 which displays schedule information to indicate when a particular program will be broadcast for viewing and on which channel the program will be broadcast. The broadcast program schedule information includes broadcast program names 306 and associated broadcast program channel numbers 308 corresponding to the programs that are scheduled to be broadcast.

In this example, program guide 300 also includes a current time display 310, a current date display 312, and broadcast program time displays 314 that indicate a time of day when a program will be broadcast for viewing. A particular broadcast program channel number 308 corresponds to a broadcast program time display 314 to indicate a program channel over which a program will be broadcast for viewing. For example, a "Local News" program will be broadcast for viewing at 9:30 a.m. on program channel six (6).

Program guide 300 includes a selectable control 316 that, when selected, scrolls the program grid section 304 ahead in time and/or ahead in days to provide a viewer with schedule information about future program broadcasts. Similarly, a selectable control 318, when selected, scrolls the program grid section 304 back in time and/or back in days to display previous programs and schedule information. Program guide 300 can also include a selectable control implemented as an on-screen focus, such as selectable control 142 (Fig. 1) described with reference to the virtual channel preview guide 102. An on-screen focus can be positioned to identify, or otherwise hi-lite, a broadcast program 306 and, when selected, initiate client device 104 tuning to the associated broadcast channel to render the broadcast program for display.

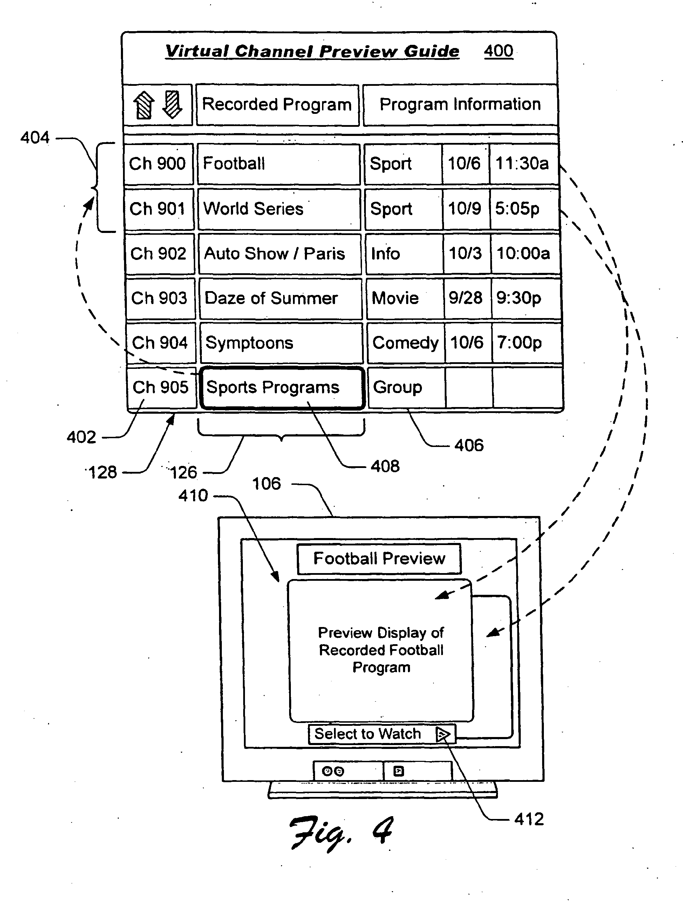

Fig. 4 illustrates an exemplary section of a virtual channel preview guide 400 that includes a virtual channel 402 (identified as "Ch 905") which corresponds to a group 404 of recorded programs. The group 404 of recorded sports programs includes the recorded "Football" program and the recorded "World Series" program identified by virtual channels "Ch 900" and "Ch 901", respectively. Virtual channel 402 is identified as a recorded programs group with a group identifier 406.

When virtual channel 402 or the program group identifier 126 is selected, such as with a selectable control 408, a preview display 410 of each recorded program corresponding to the group 404 is initiated for display on display device 106. The preview display 410 can be initiated to display a preview of each recorded program sequentially, as shown, or the preview display 410 can be initiated to show several previews of recorded programs on display device 106 at the same time. The preview display 410 includes a selectable control 412 that, when selected, initiates client device 104 (Fig. 1) discontinuing the preview display 410 and begin rendering the selected recorded program for viewing on display device 106.

Methods for a virtual channel preview guide may be described in the general context of computer-executable instructions. Generally, computer-executable instructions include routines, programs, objects, components, data structures, procedures, and the like that perform particular functions or implement particular abstract data types. The described methods may also be practiced in distributed computing environments where functions are performed by remote processing devices that are linked through a communications network. In a distributed computing environment, computer-executable instructions may be located in both local and remote computer storage media, including memory storage devices.

Fig. 5 illustrates a method 500 for a virtual channel preview guide of recorded broadcast and on-demand programs and content. The order in which the method is described is not intended to be construed as a limitation, and any number of the described method blocks can be combined in any order to implement the method. Furthermore, the method can be implemented in any suitable hardware, software, firmware, or combination thereof.

At block 502, broadcast and/or on-demand programs and content are received. The programs can be received as broadcast programs, on-demand programs or content, video on-demand programs and/or as any combination thereof. At block 504, the broadcast and/or on-demand programs and content are recorded and maintained as recorded programs with a local memory component. For example, client device 104 (Fig. 1) includes a memory component 114 to record and maintain recorded programs 120 that have been received as broadcast programs (or as on-demand programs 110 that are received and recorded).

At block 506, a different virtual channel is assigned to each of the one or more recorded programs. The recorded programs being assigned a different virtual channel can include, for example, the recorded programs 120 maintained locally at client device 104 with memory component 114, the on-demand programs and content 110 maintained by a remote program data store 108, and/or a combination of recorded broadcast and on-demand programs. For example, the program guide application 116 (Fig. 1) can assign virtual channels 128 (e.g., channel numbers 900 to 904 in this example) to the recorded programs 126. At block 508, an additional virtual channel is assigned to a group of one or more recorded programs. For example, virtual channel 402 (Fig. 4) is assigned to a group 404 of recorded programs that are identified as recorded sports programs.

At block 510, a virtual channel preview guide is generated to display the different virtual channels and the associated recorded programs. For example, virtual channel preview guide 102 (Fig. 1) is generated by program guide application 116 to display the virtual channels 128 and the associated recorded program identifiers 126 which correspond to the on-demand programs and content 110 and/or the recorded programs 120. The recorded programs 120 are maintained with the local (e.g., integrated with client device 104) memory component 114 and can include recorded broadcast programs and recorded on-demand programs. The recorded programs also include the on-demand programs and content 110 that are maintained with a remote program data store 108, or at an on-demand program provider. The virtual channel preview guide (e.g., preview guide 400) can also be generated to display the virtual channel 402 assigned to the group 404 of recorded programs. The virtual channel preview guide can be generated to display the recorded programs in alphabetical order and/or in a user-selectable order. Further, the virtual channel preview guide can be generated to display, for each of the recorded programs, a program name, an associated virtual channel number, and a date when a broadcast program was recorded, a time when a broadcast program was recorded, and a recorded program descriptor.

At block 512, a virtual channel selection of a virtual channel is received. For example, client device 104 (Fig. 1) can receive a user input as a virtual channel selection of a virtual channel identifier 128 or a recorded program identifier 126. Additionally, the virtual channel selection can be a virtual channel that corresponds to a group of recorded programs. For example, client device 104 can receive a user input as a virtual channel selection of virtual channel 402 (Fig. 4) that corresponds to a group 404 of recorded programs.

At block 514, a preview of a recorded program assigned to the selected virtual channel is initiated. For example, client device 104 initiates a preview display 200 of a recorded program 120 that is assigned, or otherwise associated, with a selected virtual channel 126. Additionally, in an event that a virtual channel selection corresponds to a group of recorded programs, client device 104 can initiate a preview display 410 of the recorded programs in the group 404 of recorded programs.

At block 516, the preview is received as a section of a video on-demand program corresponding to the virtual channel selection. For example, in an event that a virtual channel selection corresponds to an on-demand program 110 stored with a remote program data store 108, client device 104 receives the preview 200 as a section of the selected on-demand program.

At block 518, the preview of the recorded program is rendered for display. Rendering the preview can include rendering the preview as a section of a video on-demand program, as a duration 204 (Fig. 2) of the recorded program 120 corresponding to a beginning 206 of the recorded program, as a section 206 or 208 of the recorded program 120 that is designated with a preview marker 210 and/or 212, and/or as one or more sections 206 and 208 of the recorded program 120 where the one or more sections are designated with one or more preview markers.

At block 520, a selectable input is received to initiate rendering the recorded program. For example, client device 104 (Fig. 1) can receive a user input of selectable control 216 (Fig. 2) or selectable control 412 (Fig. 4) to initiate rendering the associated recorded program(s) for display. At block 522, the recorded program is rendered for display in response to the selectable input. The recorded program can be rendered as an on-demand program 110, as a recorded broadcast program 120, or as a recorded on-demand program maintained by client device 104 with local memory component 114.

At block 524, program guide data is received that includes broadcast program information for programs that are scheduled to be broadcast. For example, client device 104 receives broadcast program identifiers and associated program channel identifiers for programs that are scheduled to be broadcast.

At block 526, a program guide is generated that includes the broadcast program information and the virtual channel preview guide that includes the recorded program information. A program guide can be generated to include a broadcast program identifier and an associated program channel identifier for programs scheduled to be broadcast, and to include a virtual channel preview guide that displays a recorded program identifier and an associated virtual channel identifier for each of the recorded programs. For example, program guide application 116 is implemented to generate program guide 300 (Fig. 3) to display a virtual channel preview guide that includes the recorded program information shown in program grid section 302, and to display a broadcast program name 306 and an associated program channel number 308 in program grid section 304 for each of programs scheduled to be broadcast.

Fig. 6 illustrates a television-based system 600 that includes an exemplary client device 602 which includes components to implement a virtual channel preview guide, such as the exemplary processing system 100 (Fig. 1). System 600 also includes a display device 604 to display the virtual channel preview guide 102 (Fig. 1) and the program guide 300 (Fig. 3). Client device 602 can be implemented as a set-top box, a satellite receiver, a TV recorder with a hard disk, a digital video recorder (DVR) and playback system, a game console, an information appliance, and as any number of similar embodiments.

Client device 602 includes one or more tuners 606 which are representative of one or more in-band tuners that tune to various frequencies or channels to receive television signals, as well as an out-of-band tuner that tunes to the broadcast channel over which program data is broadcast to client device 602. Client device 602 also includes one or more processors 608 (e.g., any of microprocessors, controllers, and the like) which process various instructions to control the operation of client device 602 and to communicate with other electronic and computing devices.

Client device 602 can be implemented with one or more memory components, examples of which include a random access memory (RAM) 610, mass storage media 612, a disk drive 614, and a non-volatile memory 616 (e.g., ROM, Flash, EPROM, EEPROM, etc.). Disk drive 614 can include any type of magnetic or optical storage device, such as a hard disk drive, a magnetic tape, a rewriteable compact disc, a DVD, and the like. The one or more memory components store various information and/or data such as received content, program guide data 618, recorded programs 620, configuration information for client device 602, and/or graphical user interface information. Alternative implementations of client device 602 can include a range of processing and memory capabilities, and may include any number of differing memory components than those illustrated in Fig. 6. For example, full-resource clients can be implemented with substantial memory and processing resources, whereas low-resource clients may have limited processing and memory capabilities.

An operating system 622 and one or more application programs 624 can be stored in non-volatile memory 616 and executed on processor(s) 608 to provide a runtime environment. A runtime environment facilitates extensibility of client device 602 by allowing various interfaces to be defined that, in turn, allow application programs 624 to interact with client device 602. The application programs 624 can include a browser to browse the Web (e.g., "World Wide Web"), an email program to facilitate electronic mail, and any number of other application programs.

A program guide application 626 that executes on processor(s) 608 is also stored in non-volatile memory 616 and is implemented to process the program guide data 618 and generate virtual channel preview guide 102 (Fig. 1) and program guide 300 (Fig. 3) for display. Program guide application 626 generates the program guides which enable a viewer to navigate through an onscreen display and locate broadcast programs, recorded programs, video on-demand programs and movies, interactive game selections, and other media access information or content of interest to the viewer. With program guide application 626, the television viewer can look at schedules of current and future programming, set reminders for upcoming programs, and/or enter instructions to record one or more programs.

Client device 602 further includes one or more communication interfaces 628 and a PSTN, DSL, cable, or other type of modem 630. A communication interface 628 can be implemented as a serial and/or parallel interface, as a wireless interface, and/or as any other type of network interface. A wireless interface enables client device 602 to receive control input commands 632 and other information from a user-operated input device, such as from a remote control device 634 or from another infrared (IR), 802.11, Bluetooth, or similar RF input device. Input devices can include a wireless keyboard or another handheld input device 636 such as a personal digital assistant (PDA), handheld computer, wireless phone, or the like. A network interface and a serial and/or parallel interface enables client device 602 to interact and communicate with other electronic and computing devices via various communication links. Modem 630 facilitates client device 602 communication with other electronic and computing devices via a conventional telephone line, a DSL connection, cable, and/or other type of connection.

Client device 602 also includes a content processor 638 which can include a video decoder and/or additional processors to receive, process, and decode broadcast video signals and program data, such as NTSC, PAL, SECAM, or other television system analog video signals, as well as DVB, ATSC, or other television system digital video signals. For example, content processor 638 can include an MPEG-2 or MPEG-4 (Moving Pictures Experts Group) decoder that decodes MPEG-encoded video content and/or image data. The systems described herein can be implemented for any type of video encoding format as well as for data and/or content streams that are not encoded.

Typically, video content and program data includes video data and corresponding audio data. Content processor 638 generates video and/or display content that is formatted for display on display device 604, and generates decoded audio data that is formatted for presentation by a presentation device, such as one or more speakers (not shown) in display device 604. Content processor 638 can include a display controller (not shown) that processes the video and/or display content to display corresponding images on display device 604. A display controller can include a graphics processor, microcontroller, integrated circuit, and/or similar video processing component to process the images.

Client device 602 also includes an audio and/or video output 640 that provides the audio, video, and/or display signals to television 604 or to other devices that process and/or display, or otherwise render, the audio and video data. Video signals and audio signals can be communicated from client device 602 to television 604 via an RF (radio frequency) link, S-video link, composite video link, component video link, or other similar communication link.

Although shown separately, some of the components of client device 602 may be implemented in an application specific integrated circuit (ASIC). Additionally, a system bus (not shown) typically connects the various components within client device 602. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

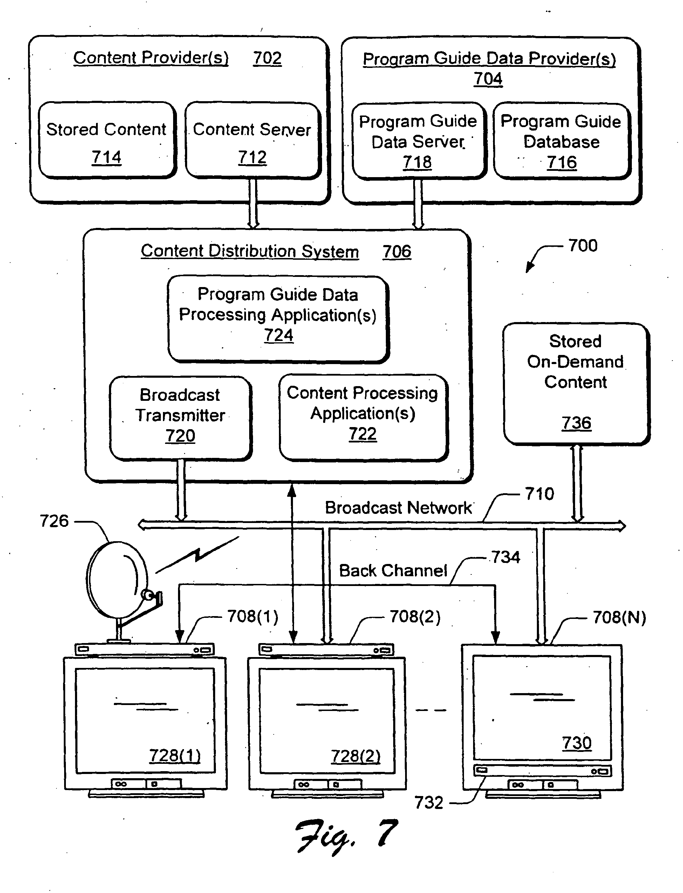

Fig. 7 illustrates an exemplary system architecture 700 in which a virtual channel preview guide can be implemented. System 700 facilitates distribution of content and program guide data to multiple viewers. The system 700 includes one or more content providers 702, one or more program guide data providers 704, a content distribution system 706, and multiple client devices 708(1), 708(2), ..., 708(N) coupled to the content distribution system 706 via a broadcast network 710.

A content provider 702 can be implemented as a satellite operator, a network television operator, a cable operator, and the like. A content provider 702 includes a content server 712 to control distribution of stored content 714, such as movies, television programs, commercials, music, and similar audio, video, and/or image content from content provider 702 to the content distribution system 706. Additionally, content server 712 controls distribution of live content (e.g., content that was not previously stored, such as live feeds) and/or content stored at other locations to the content distribution system 706.

A program guide data provider 704 includes a program guide database 716 and a program guide data server 718. The program guide database 716 stores electronic files of program guide data which is used to generate an electronic or interactive program guide (or, "program guide"). Program guide data can include a program title, program broadcast day(s) to identify which days of the week the program will be broadcast, program start times(s) to identify a time that the program will be broadcast on the particular day or days of the week, and a program category. A program category describes the genre of a program and categorizes it as a particular program type. For example, a program can be categorized as a movie, a comedy, a sporting event, a news program, a sitcom, a talk show, or as any number of other category descriptions. Program guide data can also include program ratings, characters, descriptions, actor names, station identifiers, channel identifiers, other schedule information, and so on. Additionally, program guide data may include video on-demand content information, such as movie schedules, as well as application information, such as for interactive games, and other programming information that may be of interest to a viewer.

The program guide data server 718 processes the program guide data prior to distribution to generate a published version of the program guide data which can contain programming information for all broadcast channels and on-demand content listings for one or more days. The processing may involve any number of techniques to reduce, modify, or enhance the program data such as data compression, format modification, and the like. The program guide data server 718 controls distribution of the published version of the program guide data from a program guide data provider 704 to the content distribution system 706 using, for example, a file transfer protocol (FTP) over a TCP/IP network (e.g., Internet or Intranet). Further, the published version of the program guide data can be transmitted from program data provider 704 via a satellite and the content distribution system 706 directly to a client device 708.

Content distribution system 706 is representative of a headend service and/or program data center that provides program guide data, as well as content, to multiple subscribers (e.g., client devices 708). Each content distribution system 706 may receive a different version of the program guide data that takes into account different programming preferences and lineups. The program guide data server 718 can create different versions of the program guide data that includes those channels of relevance to respective headend services, and the content distribution system 706 transmits the program guide data to the multiple client devices 708. In one implementation, for example, content distribution system 706 utilizes a carousel file system to repeatedly broadcast the program guide data over an out-of-band (OOB) channel to the client devices 708. Alternatively, the multiple client devices 708 can receive standard, or uniform, program guide data and individually determine which program guide data to display based on the associated headend service.

Content distribution system 706 includes a broadcast transmitter 720, one or more content processing applications 722, and one or more program guide data processing applications 724. Broadcast transmitter 720 broadcasts signals, such as cable television signals, across broadcast network 710. Broadcast network 710 can include a cable television network, RF, microwave, satellite, and/or data network, such as the Internet, and may also include wired or wireless transmission media using any broadcast format or broadcast protocol. Additionally, broadcast network 710 can be any type of network, using any type of network topology and any network communication protocol, and can be represented or otherwise implemented as a combination of two or more networks.

A content processing application 722 processes the content received from a content provider 702 prior to transmitting the content across broadcast network 710. Similarly, a program guide data processing application 724 processes the program guide data received from a program guide data provider 704 prior to transmitting the program guide data across broadcast network 710. A particular content processing application 722 may encode, or otherwise process, the received content into a format that is understood by the multiple client devices 708 which are coupled to broadcast network 710. Although Fig. 7 shows a single content provider 702, a single program guide data provider 704, and a single content distribution system 706, exemplary system 700 can include any number of content providers and/or program guide data providers coupled to any number of content distribution systems.

Client devices 708 can be implemented in a number of ways. For example, a client device 708(1) receives broadcast content from a satellite-based transmitter via a satellite dish 726. Client device 708(1) is also referred to as a set-top box or a satellite receiving device. Client device 708(1) is coupled, to a television 728(1) for presenting the content received by the client device (e.g., audio data, video data, and image data), as well as a graphical user interface. A particular client device 708 can be coupled to any number of televisions 728 and/or similar devices that can be implemented to display or otherwise render content. Similarly, any number of client devices 708 can be coupled to a single television 728.

Client device 708(2) is also coupled to receive broadcast content from broadcast network 710 and provide the received content to associated television 728(2). Client device 708(N) is an example of a combination television 730 and integrated set-top box 732. In this example, the various components and functionality of the set-top box are integrated into the television, rather than using two separate devices. The set-top box integrated into the television can receive broadcast signals via a satellite dish (similar to satellite dish 726) and/or via broadcast network 710. In alternate implementations, client devices 708 may receive broadcast signals via the Internet or any other broadcast medium, such as back channel 734 which can be implemented as a Internet protocol (IP) connection or as other protocol connections using a modem connection and conventional telephone line, for example. Further, back channel 734 provides an alternate communication link between each of the client devices 708, and between the client devices 708 and the content distribution system 706.

The exemplary system 700 also includes stored on-demand content 736, such as video on-demand (VOD) movie content. The stored on-demand content 736 can be viewed with a television 728 via a client device 708 through an onscreen movie guide, for example, and a viewer can enter instructions to stream a particular movie, or other stored content, to a corresponding client device 708.

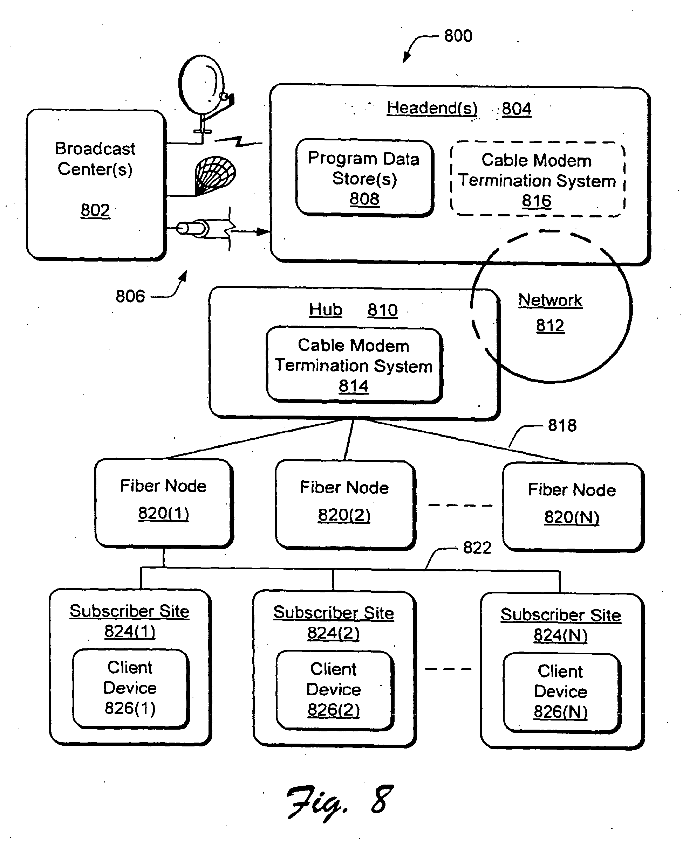

Fig. 8 illustrates an exemplary broadcast video distribution architecture 800 in which a virtual channel preview guide can be implemented. One or more broadcast centers 802 provide broadcast content to one or more headends 804 via one or more transmission media 806. Each broadcast center 802 and headend 804 interfaces with the various transmission media 806, such as a satellite transmission, radio frequency transmission, cable transmission, and/or via any number of other transmission media. A broadcast center 802 can be implemented as a satellite operator, a network television operator, a cable operator, and the like.

A headend 804 includes one or more program data stores 808 to record the broadcast content that is received via a transmission media 806. The broadcast content can be stored, or otherwise recorded, while the broadcast content is in a compressed format, for example, in order to facilitate the ongoing storage of the content over days, weeks, or even indefinitely. The compression format may comport with a Moving Pictures Expert Group (MPEG) algorithm, such as MPEG-2, MPEG-4, and so forth. Other compression technologies may alternatively be employed, such as Microsoft Windows® Media, Advanced Simple Profile (ASP), Cintak, and the like.

A headend 804 and a hub 810 communicate across a network 812 which can be implemented as a fiber ring that may operate with a packet-based protocol, such as Internet protocol (IP), IP over asynchronous transfer mode (ATM), and other protocols. Packets can therefore be communicated between headend 804 and hub 810 which includes a cable modem termination system 814 for terminating communications from downstream cable modems. Alternatively, headend 804 may include a cable modem termination system 816 to terminate the cable modem communications. Although only one hub 810 is illustrated in architecture 800, a headend 804 can distribute broadcast content to multiple hubs 810 via network 812.

Hub 810 distributes the broadcast content over fiber lines 818 to one or more fiber nodes 820(1), 820(2) ... 820(N). Each fiber node 820 has one or more coaxial lines 822 over which the broadcast content is output, and each coaxial line 822 includes coaxial line drops to multiple subscriber sites 824(1), 824(2), ... 824(N). Each subscriber site 824 includes one or more client devices 826(1), 826(2), ... 826(N), respectively. Subscriber sites 824 can be homes, businesses, and the like with each subscriber site 824 including multiple client devices 826 that are each directly or indirectly interfacing with one or more of coaxial lines 822. Client devices 826 may be computers, set-top boxes of varying capabilities, hand-held and/or portable electronic devices, digital televisions, and so forth. Each client device 826 may include an integrated video screen or may be coupled to a video screen.

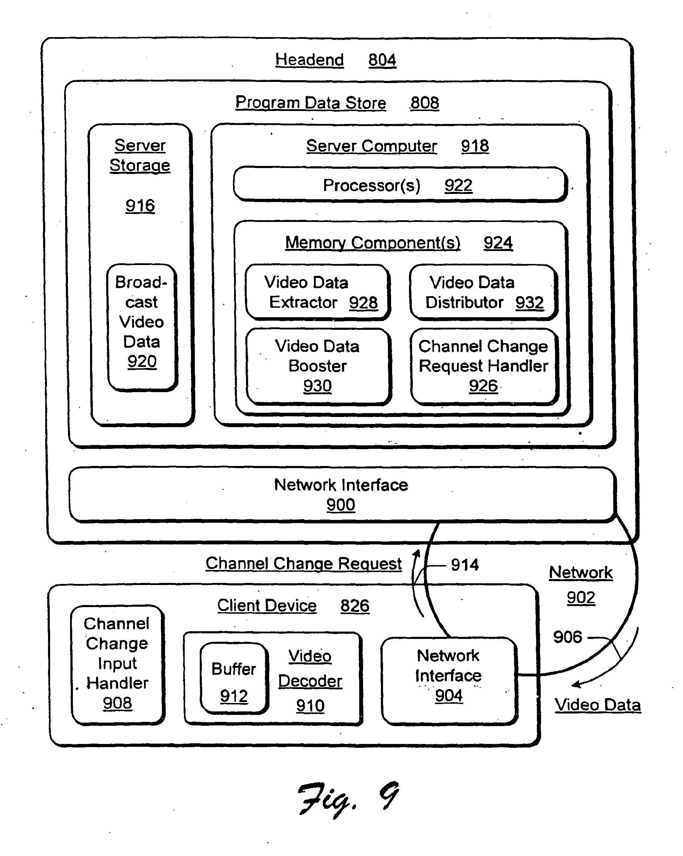

Fig. 9 further illustrates an exemplary headend 804 and an exemplary client device 826 as shown in Fig. 8. Headend 804 includes a network interface 900 to communicate over a network 902, and client device 826 includes a network interface 904 to communicate over the network 902. Network 902 can be any two-way unicast network, such as a unicast network that enables point-to-point Internet protocol (IP) sessions, for example. Alternatively, network 902 can be implemented as a video-on-demand (VOD) type network, as a video over digital subscriber line (DSL)-based network, and the like.

Network 902 may include one or more other nodes that are upstream of client device 826 in addition to headend 804. For example, hub 810 (Fig. 8) and fiber nodes 820 may be located between client device 826 and headend 804 for forwarding and/or routing packets or other communications between the devices. Additionally, network 902 can be implemented as a combination of networks and network interfaces 900 and 904 may vary depending on the architecture of network 902. In an exemplary cable network implementation, network interface 900 includes a cable modem termination system (such as system 816 in Fig. 8) if there is not an intervening cable modem termination system in network 902, and network interface 904 includes a cable modem. Network interface 900 and/or network interface 904 may also include components for interacting with an IP network, a DSL network, and so forth. These components may include a receiver, a transmitter, a transceiver, etc. that are adapted to interact with the appropriate network.

In one exemplary implementation, broadcast content distribution from headend 804 to client device 826 is implemented with a point-to-point IP session that is established between headend 804 and client device 826. Broadcast content, such as video data 908 for a specific channel, is streamed to client device 826 across network 902. Thus, each client device 826 receives its own designated broadcast video data stream according to its corresponding requested channel. Further, each fiber node 820 (Fig. 1), if present, has a different current allocation of a two-way portion of the network that is intended for downstream transmissions to client devices 826.

Client device 826 includes a channel change input handler 908 and a video decoder 910, as well as the network interface 904. Video decoder 910 includes a buffer 912 for storing received broadcast content, such as the video data, prior to decoding. Channel change input handler 908 receives channel change input requests from a user of client device 826. A channel change input request can be received from a remote control, a keyboard, a personal digital assistant (PDA), a touch-sensitive screen, integrated keys, and from any other type of input device.

Channel change input handler 908 can be implemented as executable instructions and/or hardware, software, firmware, or some combination thereof. Channel change input handler 908 constructs a channel change request 914 in packet form that includes an indicator of the requested channel. Channel change request 914 is communicated from channel change input handler 908 to network interface 904 of client device 826 for transmission over network 902.

Network interface 900 of head end 804 receives channel change request 914 via network 902, and provides the channel change request 914 to the program data store 808. Program data store 808 includes a server storage 918 and a server computer 918. Server storage 918 includes a storage device (not explicitly shown) that comprises mass memory storage, such as a disk-based storage device. Examples of suitable disk-based storage devices and/or systems include a redundant array of independent/inexpensive disks (RAID), a Fibre Channel storage device, and the like.

Server storage 918 stores broadcast video data 920 which is broadcast from a broadcast center 802 (Fig. 1) to headend 804 in a compressed format. In an exemplary implementation, the compressed format comprises a digital stream in accordance with an MPEG protocol, such as MPEG-4. However, other compression formats may alternatively be used. As the compressed digital stream is received at headend 804, it is stored as broadcast video data 920. Server storage 918 can maintain broadcast video data 920 for multiple channels as it is received over hours, days, weeks, and/or indefinitely.

Server computer 918 enables access to the stored, or otherwise recorded, broadcast video data 920 at server storage 918. Server computer 918 includes one or more processors 922 and one or more memory component(s) 924. Although not shown, server computer 918 may also include other components such as input/output interfaces; a local disk drive; hardware and/or software for encoding, decoding, and otherwise manipulating video data, and so forth. A memory component 924 can be implemented as, or include, a non-volatile memory such as disk drive(s) or flash memory and/or volatile memory such as random access memory (RAM). In an exemplary implementation, a memory component 924 includes electronically-executable instructions.

Specifically, a memory component 924 includes the following electronically-executable instructions: a channel change request handler 928, a video data extractor 928, a video data booster 930, and a video data distributor 932. The electronically-executable instructions of memory component 924 can be executed on a processor 922 to implement functions as described below. In alternative implementations, one or more of channel change request handler 926, video data extractor 928, video data booster 930, and video data distributor 932 may be stored in a memory such that they are hardware encoded for automatic execution and/or for faster execution by a processor 922.

Network interface 900 forwards channel change request 914 to channel change request handler 926 which isolates the requested channel from channel change request 914 and provides the requested channel to video data extractor 928. Video data extractor 928 extracts broadcast video data for the requested channel from broadcast video data 920 of server storage 918. Video data distributor 932 communicates the broadcast video data to network interface 900 which transmits the broadcast video data over network 902 as video data packet(s) 908. Client device 826 receives the video data packet(s) 908 via network 902 at network interface 904.

Although the invention has been described in language specific to structural features and/or methods, it is to be understood that the invention defined in the appended claims is not necessarily limited to the specific features or methods described. Rather, the specific features and methods are disclosed as exemplary implementations of the claimed invention.

## Claims

1. A client device, comprising:
a memory storing an application program (116) configured
- to associate a plurality of different first virtual channels with a plurality of different recorded programs, such that each first virtual channel has a single recorded program associated therewith, the application program further configured
- to generate a virtual channel preview guide (400) to display the different first virtual channels and the associated recorded programs as part of a program guide, said application program (116) further configured
- to associate one or more second virtual channels with one or more groups, each group corresponding to a plurality of the recorded programs, the application program being configured
- to display the one or more second virtual channels and a group identifier of the group corresponding to the recorded programs along with the first virtual channels in the virtual channel preview guide displayed as part of the program guide; and
a processor (118) configured
- to receive a virtual channel selection of one of said second virtual channels and initiate a preview of the plurality of recorded programs, wherein the preview is initiated using one or more sections of each of the recorded programs, the one or more sections of each of the recorded programs used as the preview being designated with one or more preview markers.

2. A client device as recited in claim 1, wherein the plurality of recorded programs include at least one recorded broadcast program and at least one on-demand program.

3. A client device as recited in claim 1 or 2, wherein the application program is further configured to generate the virtual channel preview guide to display the different virtual channels for each of one or more recorded broadcast programs and each of one or more on-demand programs.

4. A client device as recited in one of claims 1 to 3, further comprising a memory component configured to maintain digital program content corresponding to at least one recorded broadcast program, and wherein the plurality of recorded programs include the at least one recorded broadcast program and at least one on-demand program maintained with a remote program data store.

5. A client device as recited in one of claims 1 to 3, further comprising a memory component configured to maintain digital program content corresponding to at least one recorded broadcast program, and wherein the plurality of recorded programs include the at least one recorded broadcast program and at least one on-demand program maintained by an on-demand program provider.

6. A client device as recited in one of claims 1 to 5, further comprising a memory component configured to record broadcast program content corresponding to the plurality of recorded programs, and wherein the application program is further configured to generate the first virtual channel preview guide to display the different virtual channels for each of the recorded programs and each of one or more on-demand programs.

7. A client device as recited in one of claims 1 to 6, further comprising: a tuner configured to receive broadcast program content corresponding to the plurality of recorded programs, the tuner further configured to receive on-demand program content corresponding to the plurality of recorded programs; a memory component configured to record the broadcast program content; and wherein the application program is further configured to generate the virtual channel preview guide to display the different first virtual channels for each of the recorded broadcast programs and for each of the on-demand programs.

8. A client device as recited in one of claims 1 to 7, wherein the processor is further configured to receive an on-demand selection corresponding to a selected one of the first virtual channels and initiate receiving the recorded program associated with the virtual channel.

9. A client device as recited in one of claims 1 to 8, further comprising a memory component configured to maintain digital program content corresponding to the recorded program, and wherein the processor is further configured to receive an on-demand selection corresponding to a selected one of the first virtual channels and initiate receiving one of the recorded programs.

10. A client device as recited in one of claims 1 to 9, further comprising: a tuner configured to receive broadcast program content, and further configured to receive on-demand program content; and a memory component configured to maintain the broadcast program content and the on-demand program content as the plurality of recorded programs.

11. A client device as recited in one of claims 1 to 10, further comprising a program content processor configured to render the preview of the recorded program.

12. A client device as recited in claim 11, wherein the processor is further configured to receive a selectable input to initiate rendering the recorded program.

13. A client device as recited in one of claims 1 to 12, wherein the processor is further configured to initiate the preview as a duration of the recorded program that corresponds to a beginning of the recorded program.

14. A client device as recited in one of claims 1 to 13, wherein the application program is further configured to list the plurality of recorded programs in alphabetical order in the virtual channel preview guide.

15. A client device as recited in one of claims 1 to 14, wherein the application program is further configured to list the plurality of recorded programs in a user-selectable order in the virtual channel preview guide.

16. A client device as recited in one of claims 1 to 15, wherein the application program is further configured to generate the virtual channel preview guide to display, for each of the plurality of recorded programs, a program name, an associated virtual channel number, and a date when a recorded program was recorded, a time when the recorded program was recorded, and a program descriptor.

17. A virtual channel preview guide, comprising:
one or more program identifiers that each correspond to a recorded program;
one or more virtual channel identifiers each associated with a different program identifier;
an additional virtual channel identifier associated with a group of recorded programs;
a selectable control configured to initiate a preview of a recorded program, wherein the preview is initiated using one or more sections of the recorded program, the one or more sections being designated with one or more preview markers;
an additional selectable control configured to initiate a preview of each program of the group of recorded programs; and
a preview display configured to display the preview of the recorded program and a preview of each program of the group of recorded programs in an event that the selectable control is selected.

18. A virtual channel preview guide as recited in claim 17, wherein the one or more program identifiers correspond to at least one recorded broadcast program and at least one on-demand program.

19. A virtual channel preview guide as recited in claim 17, wherein the one or more program identifiers correspond to at least one recorded broadcast program maintained with a local memory component and at least one on-demand program maintained with a remote program data store.

20. A virtual channel preview guide as recited in one of claims 17 to 19, wherein the selectable control is a virtual channel identifier corresponding to the recorded program.

21. A virtual channel preview guide as recited in one of claims 17 to 19, wherein the selectable control is a program identifier corresponding to the recorded program.

22. A virtual channel preview guide as recited in one of claims 17 to 21, wherein the preview display includes an additional selectable control configured to initiate rendering the recorded program in an event that the additional selectable control is initiated.

23. A virtual channel preview guide as recited in one of claims 17 to 22, wherein the selectable control is further configured to initiate the preview as a duration of the recorded program that corresponds to a beginning of the recorded program.

24. A virtual channel preview guide as recited in one of claims 17 to 23, wherein the one or more program identifiers are listed in alphabetical order.

25. A virtual channel preview guide as recited in one of claims 17 to 23, wherein the one or more program identifiers are listed in a user-selectable order.

26. A virtual channel preview guide as recited in one of claims 17 to 25, wherein the one or more program identifiers are each a program name of a recorded program, and wherein the one or more virtual channel identifiers are each a different virtual channel number associated with a different program name.

27. A virtual channel preview guide as recited in one of claims 17 to 26, further comprising one or more recorded program descriptors that each identify a category of a recorded program.

28. A method, comprising:
assigning a plurality of different first virtual channels to each of a corresponding plurality of recorded programs, wherein each first virtual channel has a single recorded program associated therewith, wherein each recorded program is categorized according to a program descriptor that describes a genre of the recorded program;
designating one or more second virtual channels as group virtual channels, each second virtual channel corresponding to a group of a plurality of the first virtual channels and associated recorded programs, said second virtual channels each including a group identifier identifying the second virtual channel as a group channel, wherein each second virtual channel represents a group corresponding to a different category of program genre;
generating a virtual channel preview guide to display the different first virtual channels and the corresponding recorded programs, and to further display the second virtual channels and corresponding group identifiers, wherein the virtual channel preview guide is displayed as part of a grogram guide that also displays channel and schedule information for broadcast channels;
receiving a different virtual channel to each of one or more recorded programs;
receiving a virtual channel selection of a second virtual channel corresponding to a group of first virtual channels;
initiating previews of a plurality of recorded programs associated with the group of first virtual channels corresponding to the selected second virtual channel, and
displaying the previews of the plurality of recorded programs as one or more sections of each of the recorded programs in a preview display by starting each preview of each recorded program at a point of digital content of the recorded program indicated by at least one preview marker.

29. A method as recited in claim 28, wherein assigning includes assigning different virtual channels to each of one or more recorded broadcast programs and each of one or more on-demand programs.

30. A method as recited in claim 28, wherein generating includes generating the virtual channel preview guide to display the additional virtual channel and a group identifier of the group of one or more recorded programs.

31. A method as recited in one of claims 28 to 30, further comprising: receiving the plurality of recorded programs which include at least one recorded broadcast program and at least one on-demand program; maintaining the at least one recorded broadcast program with a local memory component; and wherein generating includes generating the virtual channel preview guide to display the at least one recorded broadcast program and the at least one on-demand program maintained with a remote program data store.

32. A method as recited in one of claims 28 to 30, further comprising: receiving the plurality of recorded programs which include at least one recorded broadcast program and at least one on-demand program; maintaining the at least one recorded broadcast program with a local memory component; and wherein generating includes generating the virtual channel preview guide to display the at least one recorded broadcast program and the at least one on-demand program maintained by an on-demand program provider.

33. A method as recited in one of claims 28 to 32, further comprising: receiving an on-demand program corresponding to a first virtual channel selection; and rendering the preview as a section of the on-demand program.

34. A method as recited in one of claims 28 to 32, further comprising rendering the preview as a duration of the recorded program corresponding to a beginning of the recorded program.

35. A method as recited in one of claims 28 to 32, further comprising rendering the preview as one or more sections of the recorded program, the one or more sections being designated with one or more preview markers.

36. A method as recited in one of claims 28 to 32, further comprising: rendering the preview of the recorded program; receiving a selectable input to initiate rendering the recorded program; and rendering the recorded program.

37. A method as recited in one of claims 28 to 32, further comprising: rendering the preview of the recorded program; receiving a selectable input to initiate rendering the recorded program; and rendering an on-demand program as the recorded program.

38. A method as recited in one of claims 28 to 37, wherein generating includes generating the virtual channel preview guide to display the one or more recorded programs in alphabetical order.

39. A method as recited in one of claims 28 to 38, wherein generating includes generating the virtual channel preview guide to display the one or more recorded programs in a user-selectable order.

40. A method as recited in one of claims 28 to 39, wherein generating includes generating the virtual channel preview guide to display, for each of the one or more recorded programs, a program name, an associated virtual channel number, and at least one of a date when a broadcast program was recorded, a time when a broadcast program was recorded, and a recorded program descriptor.

41. A method as recited in one of claims 28 to 40, further comprising generating a program guide that includes: a broadcast program identifier and an associated program channel identifier for each of one or more programs scheduled to be broadcast; and the virtual channel preview guide that includes a recorded program identifier and an associated virtual channel identifier for each of the one or more recorded programs.

## Patentansprüche

1. Eine Client-Vorrichtung, aufweisend:
einen Speicher, in dem ein Anwendungsprogramm (116) gespeichert ist, konfiguriert, um
- eine Mehrzahl verschiedener erster virtueller Kanäle mit einer Mehrzahl verschiedener aufgezeichneter Programme zu assoziieren, sodass jeder erste virtuelle Kanal ein einzelnes damit assoziierte aufgezeichnetes Programm aufweist, wobei das Anwendungsprogramm weiter konfiguriert ist, um
- einen virtuellen Kanal-Vorschau-Guide (400) zu generieren, um die verschiedenen ersten virtuellen Kanäle und die assoziierten aufgezeichneten Programme als Teil eines Programm-Guides anzuzeigen, wobei das Anwendungsprogramm (116) weiter konfiguriert ist, um
- einen oder mehrere zweite virtuelle Kanäle mit einer oder mehreren Gruppen zu assoziieren, wobei jede Gruppe einer Mehrzahl der aufgezeichneten Programme entspricht, wobei das Anwendungsprogramm konfiguriert ist, um
- den einen oder die mehreren zweiten virtuellen Kanäle und einen Gruppenidentifizierer der Gruppe, die den aufgezeichneten Programmen entspricht, zusammen mit den ersten virtuellen Kanälen im virtuellen Kanal-Vorschau-Guide als Teil des Programm-Guides anzuzeigen; und
einen Prozessor (118), der konfiguriert ist, um
- eine Auswahl virtueller Kanäle eines der zweiten virtuellen Kanäle zu empfangen und eine Vorschau der Mehrzahl aufgezeichneter Programme zu initiieren, wobei die Vorschau unter Verwendung eines oder mehrerer Abschnitte jedes der aufgezeichneten Programme initiiert ist, wobei der eine oder die mehreren Abschnitte jedes der aufgezeichneten Programme, die als die Vorschau verwendet werden, mit einer oder mehreren Vorschaumarkierungen bezeichnet sind.

2. Client-Vorrichtung nach Anspruch 1, wobei die Mehrzahl aufgezeichneter Programme zumindest ein aufgezeichnetes Rundfunkprogramm und zumindest ein Nachfrageprogramm aufweist.

3. Client-Vorrichtung nach Anspruch 1 oder 2, wobei das Anwendungsprogramm weiter konfiguriert ist, um den virtuellen Kanal-Vorschau-Guide zu generieren, um die verschiedenen virtuellen Kanäle für jedes des einen oder der mehreren aufgezeichneten Rundfunkprogramme und jedes des einen oder der mehreren Nachfrageprogramme anzuzeigen.

4. Client-Vorrichtung nach einem der Ansprüche 1 bis 3, welche des Weiteren eine Speicherkomponente aufweist, die konfiguriert ist, um einen digitalen Programminhalt aufrechtzuerhalten, der zumindest einem aufgezeichneten Rundfunkprogramm entspricht, und wobei die Mehrzahl aufgezeichneter Programme das zumindest eine aufgezeichnete Rundfunkprogramm und zumindest ein Nachfrageprogramm umfasst, das mit einem entfernten Programmdatenspeicher aufrechterhalten ist.

5. Client-Vorrichtung nach einem der Ansprüche 1 bis 3, welche des Weiteren eine Speicherkomponente aufweist, die konfiguriert ist, um einen digitalen Programminhalt aufrechtzuerhalten, der zumindest einem aufgezeichneten Rundfunkprogramm entspricht, und wobei die Mehrzahl aufgezeichneter Programme das zumindest eine aufgezeichnete Rundfunkprogramm und zumindest ein Nachfrageprogramm umfasst, das von einem Nachfrageprogramm-Provider aufrechterhalten ist.

6. Client-Vorrichtung nach einem der Ansprüche 1 bis 5, welche des Weiteren eine Speicherkomponente aufweist, die konfiguriert ist, um einen Programminhalt aufzuzeichnen, der der Mehrzahl von aufgezeichneten Programmen entspricht, und wobei das Anwendungsprogramm des Weiteren dazu konfiguriert ist, den ersten virtuellen Kanal-Vorschau-Guide zu generieren, um die verschiedenen virtuellen Kanäle für jedes der aufgezeichneten Programme und jedes von einem oder mehreren Nachfrageprogrammen anzuzeigen.

7. Client-Vorrichtung nach einem der Ansprüche 1 bis 6, welche des Weiteren aufweist:
einen Tuner, der konfiguriert ist, um einen Rundfunkprogramminhalt zu empfangen, der der Mehrzahl von aufgezeichneten Programmen entspricht, wobei der Tuner weiter konfiguriert ist, um einen Nachfrageprogramminhalt zu empfangen, der der Mehrzahl aufgezeichneter Programme entspricht, eine Speicherkomponente, die konfiguriert ist, um den Rundfunkprogramminhalt aufzuzeichnen, und wobei das Anwendungsprogramm weiter konfiguriert ist, um den virtuellen Kanal-Vorschau-Guide zu generieren, um die verschiedenen ersten virtuellen Kanäle für jedes der aufgezeichneten Rundfunkprogramme und für jedes der Nachfrageprogramme anzuzeigen.

8. Client-Vorrichtung nach einem der Ansprüche 1 bis 7, wobei der Prozessor weiter konfiguriert ist, um eine Nachfrageauswahl zu empfangen, die einem ausgewählten der ersten virtuellen Kanäle entspricht, und um ein Empfangen des aufgezeichneten Programms zu initiieren, das mit dem virtuellen Kanal assoziiert ist.

9. Client-Vorrichtung nach einem der Ansprüche 1 bis 8, welche des Weiteren eine Speicherkomponente aufweist, die konfiguriert ist, um einen digitalen Programminhalt aufrechtzuerhalten, der dem aufgezeichneten Programm entspricht, und wobei der Prozessor weiter konfiguriert ist, um eine Nachfrage-Auswahl zu empfangen, die einem ausgewählten der ersten virtuellen Kanäle entspricht, und um ein Empfangen eines der aufgezeichneten Programme zu initiieren.

10. Client-Vorrichtung nach einem der Ansprüche 1 bis 9, welche des Weiteren aufweist:
einen Tuner, der konfiguriert ist, um einen Rundfunkprogramminhalt zu empfangen, und der weiter konfiguriert ist, um einen Nachfrageprogramminhalt zu empfangen, und eine Speicherkomponente, die konfiguriert ist, um den Rundfunkprogramminhalt und den Nachfrageprogramminhalt als die Mehrzahl aufgezeichneter Programme aufrechtzuerhalten.

11. Client-Vorrichtung nach einem der Ansprüche 1 bis 10, die des Weiteren einen Programminhaltprozessor aufweist, der konfiguriert ist, um die Vorschau des aufgezeichneten Programms zu rendern.

12. Client-Vorrichtung nach Anspruch 11, wobei der Prozessor des Weiteren konfiguriert ist, um einen wählbaren Eingang zu empfangen, um ein Rendem des aufgezeichneten Programms zu initiieren.

13. Client-Vorrichtung nach einem der Ansprüche 1 bis 12, wobei der Prozessor weiter konfiguriert ist, um die Vorschau als eine Dauer des aufgezeichneten Programms zu initiieren, die einem Anfang des aufgezeichneten Programms entspricht.

14. Client-Vorrichtung nach einem der Ansprüche 1 bis 13, wobei das Anwendungsprogramm weiter konfiguriert ist, um die Mehrzahl aufgezeichneter Programme in alphabetischer Reihenfolge im virtuellen Kanal-Vorschau-Guide aufzulisten.

15. Client-Vorrichtung nach einem der Ansprüche 1 bis 14, wobei das Anwendungsprogramm weiter konfiguriert ist, um die Mehrzahl aufgezeichneter Programme in einer durch einen Nutzer wählbaren Reihenfolge im virtuellen Kanal-Vorschau-Guide aufzulisten.

16. Client-Vorrichtung nach einem der Ansprüche 1 bis 15, wobei das Anwendungsprogramm weiter konfiguriert ist, um den virtuellen Kanal-Vorschau-Guide zu generieren, um für jedes der Mehrzahl aufgezeichneter Programme einen Programmnamen, eine assoziierte virtuelle Kanalnummer und ein Datum, an dem das aufgezeichnete Programm aufgezeichnet wurde, eine Zeit, zu der das aufgezeichnete Programm aufgezeichnet wurde, und einen Programm-Deskriptor anzuzeigen.

17. Virtueller Kanal-Vorschau-Guide, aufweisend:
einen oder mehrere Programmidentifizierer, die jeweils einem aufgezeichneten Programm entsprechen;
einen oder mehrere virtuelle Kanalidentifizierer, die jeweils mit einem anderen Programmindentifizierer assoziiert sind;
einen zusätzlichen virtuellen Kanalidentifizierer, der mit einer Gruppe aufgezeichneter Programme assoziiert ist;
eine auswählbare Steuerung, die konfiguriert ist, um eine Vorschau eines aufgezeichneten Programms zu initiieren, wobei die Vorschau unter Verwendung eines oder
mehrerer Abschnitte des aufgezeichneten Programms initiiert ist, wobei der eine oder
die mehreren Abschnitte mit einer oder mehreren Vorschau-Markierungen bezeichnet sind;
eine zusätzliche wählbare Steuerung, die konfiguriert ist, um eine Vorschau jedes Programms der Gruppe aufgezeichneter Programme zu initiieren; und
eine Vorschauanzeige, die konfiguriert ist, um die Vorschau des aufgezeichneten Programms und eine Vorschau jedes Programms der Gruppe aufgezeichneter Programme in einem Fall anzuzeigen, dass die auswählbare Steuerung gewählt wird.

18. Virtueller Kanal-Vorschau-Guide nach Anspruch 17, wobei der eine oder die mehreren Programmidentifizierer zumindest einem aufgezeichneten Rundfunkprogramm und zumindest einem Nachfrageprogramm entsprechen.

19. Virtueller Kanal-Vorschau-Guide nach Anspruch 17, wobei der eine oder die mehreren Programmidentifizierer zumindest einem aufgezeichneten Rundfunkprogramm, das mit einer lokalen Speicherkomponente aufrechterhalten wird, und zumindest einem Nachfrageprogramm, das mit einem entfernten Programmdatenspeicher aufrechterhalten wird, entsprechen.

20. Virtueller Kanal-Vorschau-Guide nach einem der Ansprüche 17 bis 19, wobei die auswählbare Steuerung ein virtueller Kanalidentifizierer ist, der dem aufgezeichneten Programm entspricht.

21. Virtueller Kanal-Vorschau-Guide nach einem der Ansprüche 17 bis 19, wobei die auswählbare Steuerung ein Programmidentifizierer ist, der dem aufgezeichneten Programm entspricht.

22. Virtueller Kanal-Vorschau-Guide nach einem der Ansprüche 17 bis 21, wobei die Vorschau-Anzeige eine zusätzliche wählbare Steuerung aufweist, die konfiguriert ist, um das Rendern des aufgezeichneten Programms in dem Fall zu initiieren, dass die zusätzliche auswählbare Steuerung initiiert ist.

23. Virtueller Kanal-Vorschau-Guide nach einem der Ansprüche 17 bis 22, wobei die auswählbare Steuerung des Weiteren konfiguriert ist, um die Vorschau als eine Dauer des aufgezeichneten Programms zu initiieren, die einem Anfang des aufgezeichneten Programms entspricht.

24. Virtueller Kanal-Vorschau-Guide nach einem der Ansprüche 17 bis 23, wobei der eine oder die mehreren Programmidentifizierer in alphabetischer Reihenfolge aufgelistet sind.

25. Virtueller Kanal-Vorschau-Guide nach einem der Ansprüche 17 bis 23, wobei der eine oder die mehreren Programmidentifizierer in einer durch einen Nutzer wählbaren Reihenfolge aufgelistet sind.

26. Virtueller Kanal-Vorschau-Guide nach einem der Ansprüche 17 bis 25, wobei der eine oder die mehreren Programmidentifizierer jeweils ein Programmname eines aufgezeichneten Programms sind und wobei der eine oder die mehreren virtuellen Kanalidentifizierer jeweils eine andere virtuelle Kanalnummer sind, die mit einem anderen Programmnamen assoziiert ist.

27. Virtueller Kanal-Vorschau-Guide nach einem der Ansprüche 17 bis 26, der des Weiteren einen oder mehrere aufgezeichnete Programmdeskriptoren aufweist, die jeweils eine Kategorie eines aufgezeichneten Programms identifizieren.

28. Verfahren, aufweisend:
Zuweisen einer Mehrzahl verschiedener erster virtueller Kanäle zu jeden von einer entsprechenden Mehrzahl aufgezeichneter Programme, wobei jeder erste virtuelle Kanal ein damit assoziierte einzelnes aufgezeichnetes Programm aufweist, wobei jedes aufgezeichnete Programm entsprechend einem Programmdeskriptor kategorisiert ist,
der ein Genre des aufgezeichneten Programms beschreibt;
Bezeichnen eines oder mehrerer zweiter virtueller Kanäle als eine Gruppe virtueller Kanäle, wobei jeder zweite virtuelle Kanal einer Gruppe einer Mehrzahl der ersten virtuellen Kanäle und assoziierten aufgezeichneten Programmen entspricht, wobei die zweiten virtuellen Kanäle jeweils einen Gruppenidentifizierer aufweisen, der den zweiten virtuellen Kanal als einen Gruppenkanal identifiziert, wobei jeder zweite virtuelle Kanal eine Gruppe repräsentiert, die einer anderen Kategorie eines Programm-Genres entspricht;
Generieren eines virtuellen Kanal-Vorschau-Guides, um die verschiedenen ersten virtuellen Kanäle und die entsprechenden aufgezeichneten Programme anzuzeigen und
um weiter die zweiten virtuellen Kanäle und entsprechende Gruppenidentifizierer anzuzeigen, wobei der virtuelle Kanal-Vorschau-Guide als ein Teil eines Programm-Guides angezeigt wird, der auch Kanal- und Zeitplaninformationen für Rundfunkkanäle anzeigt;
Empfangen eines anderen virtuellen Kanals zu jedem des einen oder der mehreren aufgezeichneten Programme;
Empfangen einer Auswahl virtueller Kanäle eines zweiten virtuellen Kanals, der einer Gruppe erster virtueller Kanäle entspricht;
Initiieren von Vorschauen einer Mehrzahl aufgezeichneter Programme, die mit der Gruppe erster virtueller Kanäle entsprechend dem ausgewählten zweiten virtuellen Kanal assoziiert ist, und
Anzeigen der Vorschauen der Mehrzahl aufgezeichneter Programme als einen oder
mehrere Abschnitte jedes der aufgezeichneten Programme in einer Vorschauanzeige durch Starten jeder Vorschau jedes aufgezeichneten Programms an einem Punkt eines digitalen Inhalts des aufgezeichneten Programms, der durch zumindest eine Vorschaumarkierung bezeichnet ist.

29. Verfahren nach Anspruch 28, wobei das Zuweisen ein Zuweisen verschiedener virtueller Kanäle zu jedem von einem oder mehreren aufgezeichneten Rundfunkprogrammen und jedem von einem oder mehreren Nachfrageprogrammen aufweist.

30. Verfahren nach Anspruch 28, wobei das Generieren ein Generieren des virtuellen Kanal-Vorschau-Guides aufweist, um den zusätzlichen virtuellen Kanal und einen Gruppenidentifizierer der Gruppe eines oder mehrerer aufgezeichneter Programme anzuzeigen.

31. Verfahren nach einem der Ansprüche 28 bis 30, das des Weiteren aufweist:
Empfangen der Mehrzahl aufgezeichneter Programme, die zumindest ein aufgezeichnetes Rundfunkprogramm und zumindest ein Nachfrageprogramm aufweisen, Aufrechterhalten des zumindest einen aufgezeichneten Rundfunkprogramms mit einer lokalen Speicherkomponente, und wobei ein Generieren ein Generieren des virtuellen Kanal-Vorschau-Guides aufweist, um das zumindest eine aufgezeichnete Rundfunkprogramm und das zumindest eine Nachfrageprogramm, das mit einem entfernten Programmdatenspeicher aufrechterhalten wird, anzuzeigen.

32. Verfahren nach einem der Ansprüche 28 bis 30, das des Weiteren aufweist:
Empfangen der Mehrzahl aufgezeichneter Programme, die zumindest ein aufgezeichnetes Rundfunkprogramm und zumindest ein Nachfrageprogramm aufweisen, Aufrechterhalten des zumindest einen aufgezeichneten Rundfunkprogramms mit einer lokalen Speicherkomponente, und wobei ein Generieren ein Generieren des virtuellen Kanal-Vorschau-Guides aufweist, um das zumindest eine aufgezeichnete Rundfunkprogramm und das zumindest eine Nachfrageprogramm, das durch einen Nachfrageprogramm-Provider aufrechterhalten wird, anzuzeigen.

33. Verfahren nach einem der Ansprüche 28 bis 30, das des Weiteren aufweist:
Empfangen eines Nachfrageprogramms, das einer ersten virtuellen Kanalauswahl entspricht, und Rendem der Vorschau als einen Abschnitt des Nachfrageprogramms.

34. Verfahren nach einem der Ansprüche 28 bis 30, das des Weiteren ein Rendem der Vorschau als eine Dauer des aufgezeichneten Programms aufweist, das einem Anfang des aufgezeichneten Programms entspricht.

35. Verfahren nach einem der Ansprüche 28 bis 32, das des Weiteren ein Rendem der Vorschau als einen oder mehrere Abschnitte des aufgezeichneten Programms aufweist, wobei der eine oder die mehreren Abschnitte mit einer oder mehreren Vorschaumarkierungen bezeichnet sind.

36. Verfahren nach einem der Ansprüche 28 bis 32, das des Weiteren aufweist: Rendem der Vorschau des aufgezeichneten Programms, Empfangen einer auswählbaren Eingabe, um ein Rendem des aufgezeichneten Programms zu initiieren, und Rendem des aufgezeichneten Programms.

37. Verfahren nach einem der Ansprüche 28 bis 32, das des Weiteren aufweist: Rendem der Vorschau des aufgezeichneten Programms, Empfangen eines wählbaren Eingangs, um ein Rendem des aufgezeichneten Programms zu initiieren, und Rendem eines Nachfrageprogramms als das aufgezeichnete Programm.

38. Verfahren nach einem der Ansprüche 28 bis 37, wobei ein Generieren ein Generieren des virtuellen Kanal-Vorschau-Guides aufweist, um das eine oder die mehreren aufgezeichneten Programme in alphabetischer Reihenfolge anzuzeigen.

39. Verfahren nach einem der Ansprüche 28 bis 38, wobei ein Generieren ein Generieren des virtuellen Kanal-Vorschau-Guides aufweist, um das eine oder die mehreren aufgezeichneten Programme in einer durch einen Nutzer auswählbaren Reihenfolge anzuzeigen.

40. Verfahren nach einem der Ansprüche 28 bis 39, wobei ein Generieren ein Generieren des virtuellen Kanal-Vorschau-Guides aufweist, um für jedes von dem einen oder den mehreren aufgezeichneten Programmen einen Programmnamen, eine assoziierte virtuelle Kanalnummer und zumindest eines von einem Datum, an dem ein Rundfunkprogramm aufgezeichnet wurde, einer Zeit, zu der ein Rundfunkprogramm aufgezeichnet wurde, und einen aufgezeichneten Programmdeskriptor anzuzeigen.

41. Verfahren nach einem der Ansprüche 28 bis 40, das des Weiteren ein Generieren eines Programm-Guides aufweist, der umfasst: einen Rundfunkprogrammidentifizierer und einen assoziierten Programmkanalidentifizierer für jedes von dem einen oder den mehreren Programmen, deren Ausstrahlung geplant ist, und den virtuellen Kanal-Vorschau-Guide, der einen aufgezeichneten Programmidentifizierer und einen assoziierten virtuellen Kanalidentifizierer für jedes von dem einen oder den mehreren aufgezeichneten Programmen aufweist.

## Revendications

1. Dispositif client, comprenant :
une mémoire stockant un programme d'application (116) configuré de manière à :
- associer une pluralité de premiers canaux virtuels distincts à une pluralité de programmes enregistrés distincts, de sorte que chaque premier canal virtuel présente un programme enregistré unique qui lui est associé, le programme d'application étant en outre configuré de manière à :
- générer un guide électronique de prévisualisation de canaux virtuels (400) en vue d'afficher les premiers canaux virtuels distincts et les programmes enregistrés associés dans le cadre d'un guide de programme, ledit programme d'application (116) étant configuré en outre de manière à
- associer un ou plusieurs seconds canaux virtuels à un ou plusieurs groupes, chaque groupe correspondant à une pluralité de programmes enregistrés, le programme d'application étant configuré de manière à :
- afficher ledit un ou lesdits plusieurs seconds canaux virtuels et un identifiant de groupe du groupe correspondant aux programmes enregistrés avec les premiers canaux virtuels, dans le guide électronique de prévisualisation de canaux virtuels affiché dans le cadre du guide de programme ; et
un processeur (118) configuré de manière à
- recevoir une sélection de canal virtuel de l'un desdits seconds canaux virtuels et initier une prévisualisation de la pluralité de programmes enregistrés, dans lequel la prévisualisation est initiée en utilisant une ou plusieurs sections de chacun des programmes enregistrés, ladite une ou lesdites plusieurs sections de chacun des programmes enregistrés utilisée(s) en qualité de prévisualisation étant désignée(s) par un ou plusieurs marqueurs de prévisualisation.

2. Dispositif client selon la revendication 1, dans lequel la pluralité de programmes enregistrés comporte au moins un programme de diffusion enregistré et au moins un programme à la demande.

3. Dispositif client selon la revendication 1 ou 2, dans lequel le programme d'application est en outre configuré de manière à générer le guide électronique de prévisualisation de canaux virtuels en vue d'afficher les canaux virtuels distincts pour chacun d'un ou plusieurs programmes de diffusion enregistrés et chacun d'un ou plusieurs programmes à la demande.

4. Dispositif client selon l'une quelconque des revendications 1 à 3, comprenant en outre un composant de mémoire configuré de manière à conserver un contenu de programme numérique correspondant à au moins un programme de diffusion enregistré, et dans lequel la pluralité de programmes enregistrés comporte ledit au moins un programme de diffusion enregistré et au moins un programme à la demande conservé au moyen d'un magasin de stockage de données de programme à distance.

5. Dispositif client selon l'une quelconque des revendications 1 à 3, comprenant en outre un composant de mémoire configuré de manière à conserver un contenu de programme numérique correspondant à au moins un programme de diffusion enregistré, et dans lequel la pluralité de programmes enregistrés comporte ledit au moins un programme de diffusion enregistré et au moins un programme à la demande conservé par un fournisseur de programmes à la demande.

6. Dispositif client selon l'une quelconque des revendications 1 à 5, comprenant en outre un composant de mémoire configuré de manière à enregistrer un contenu de programme de diffusion correspondant à la pluralité de programmes enregistrés, et dans lequel le programme d'application est en outre configuré de manière à générer le premier guide électronique de prévisualisation de canaux virtuels en vue d'afficher les différents canaux virtuels pour chacun des programmes enregistrés et chacun d'un ou plusieurs programmes à la demande.

7. Dispositif client selon l'une quelconque des revendications 1 à 6, comprenant en outre : un syntoniseur configuré de manière à recevoir un contenu de programme de diffusion correspondant à la pluralité de programmes enregistrés, le syntoniseur étant en outre configuré de manière à recevoir un contenu de programme à la demande correspondant à la pluralité de programmes enregistrés ; un composant de mémoire configuré de manière à enregistrer le contenu de programme de diffusion ; et dans lequel le programme d'application est en outre configuré de manière à générer le guide électronique de prévisualisation de canaux virtuels en vue d'afficher les premiers canaux virtuels distincts pour chacun des programmes de diffusion enregistrés et pour chacun des programmes à la demande.

8. Dispositif client selon l'une quelconque des revendications 1 à 7, dans lequel le processeur est en outre configuré de manière à recevoir une sélection à la demande correspondant à l'un sélectionné des premiers canaux virtuels et à initier la réception du programme enregistré associé au canal virtuel.

9. Dispositif client selon l'une quelconque des revendications 1 à 8, comprenant en outre un composant de mémoire configuré de manière à conserver un contenu de programme numérique correspondant au programme enregistré, et dans lequel le processeur est en outre configuré de manière à recevoir une sélection à la demande correspondant à l'un sélectionné des premiers canaux virtuels, et à initier la réception de l'un des programmes enregistrés.

10. Dispositif client selon l'une quelconque des revendications 1 à 9, comprenant en outre : un syntoniseur configuré de manière à recevoir un contenu de programme de diffusion, et en outre configuré de manière à recevoir un contenu de programme à la demande ; et un composant de mémoire configuré de manière à conserver le contenu de programme de diffusion et le contenu de programme à la demande en tant que la pluralité de programmes enregistrés.

11. Dispositif client selon l'une quelconque des revendications 1 à 10, comprenant en outre un processeur de contenu de programme configuré de manière à rendre la prévisualisation du programme enregistré.

12. Dispositif client selon la revendication 11, dans lequel le processeur est en outre configuré de manière à recevoir une entrée sélectionnable en vue d'initier le rendu du programme enregistré.

13. Dispositif client selon l'une quelconque des revendications 1 à 12, dans lequel le processeur est en outre configuré de manière à initier la prévisualisation selon une durée du programme enregistré qui correspond au début du programme enregistré.

14. Dispositif client selon l'une quelconque des revendications 1 à 13, dans lequel le programme d'application est en outre configuré de manière à répertorier la pluralité de programmes enregistrés dans l'ordre alphabétique dans le guide électronique de prévisualisation de canaux virtuels.

15. Dispositif client selon l'une quelconque des revendications 1 à 14, dans lequel le programme d'application est en outre configuré de manière à répertorier la pluralité de programmes enregistrés dans un ordre sélectionnable par l'utilisateur dans le guide électronique de prévisualisation de canaux virtuels.

16. Dispositif client selon l'une quelconque des revendications 1 à 15, dans lequel le programme d'application est en outre configuré de manière à générer le guide électronique de prévisualisation de canaux virtuels, en vue d'afficher, pour chacun de la pluralité de programmes enregistrés, un nom de programme, un numéro de canal virtuel associé, une date à laquelle un programme enregistré a été enregistré, une heure où le programme enregistré a été enregistré, et un descripteur de programme.

17. Guide électronique de prévisualisation de canaux virtuels, comprenant :
un ou plusieurs identifiants de programme qui correspondent chacun à un programme enregistré ;
un ou plusieurs identifiants de canal virtuel associés chacun à un identifiant de programme distinct ;
un identifiant de canal virtuel supplémentaire associé à un groupe de programmes enregistrés ;
une commande sélectionnable configurée de manière à initier une prévisualisation d'un programme enregistré, dans lequel la prévisualisation est initiée en utilisant une ou plusieurs sections du programme enregistré, ladite une ou lesdites plusieurs sections étant désignées par un ou plusieurs marqueurs de prévisualisation ;
une commande sélectionnable supplémentaire configurée de manière à initier une prévisualisation de chaque programme du groupe de programmes enregistrés ; et
un écran de prévisualisation configuré de manière à afficher la prévisualisation du programme enregistré et une prévisualisation de chaque programme du groupe de programmes enregistrés dans le cas où la commande sélectionnable est sélectionnée.

18. Guide électronique de prévisualisation de canaux virtuels selon la revendication 17, dans lequel ledit un ou lesdits plusieurs identifiants de programme correspondent à au moins un programme de diffusion enregistré et au moins un programme à la demande.

19. Guide électronique de prévisualisation de canaux virtuels selon la revendication 17, dans lequel ledit un ou lesdits plusieurs identifiants de programme correspondent à au moins un programme de diffusion enregistré conservé au moyen d'un composant de mémoire local et à au moins un programme à la demande conservé au moyen d'un magasin de stockage de données de programme à distance.

20. Guide électronique de prévisualisation de canaux virtuels selon l'une quelconque des revendications 17 à 19, dans lequel la commande sélectionnable est un identifiant de canal virtuel correspondant au programme enregistré.

21. Guide électronique de prévisualisation de canaux virtuels selon l'une quelconque des revendications 17 à 19, dans lequel la commande sélectionnable est un identifiant de programme correspondant au programme enregistré.

22. Guide électronique de prévisualisation de canaux virtuels selon l'une quelconque des revendications 17 à 21, dans lequel l'écran de prévisualisation inclut une commande sélectionnable supplémentaire configurée de manière à initier le rendu du programme enregistré dans le cas où la commande sélectionnable supplémentaire est initiée.

23. Guide électronique de prévisualisation de canaux virtuels selon l'une quelconque des revendications 17 à 22, dans lequel la commande sélectionnable est en outre configurée de manière à initier la prévisualisation selon une durée du programme enregistré qui correspond au début du programme enregistré.

24. Guide électronique de prévisualisation de canaux virtuels selon l'une quelconque des revendications 17 à 23, dans lequel ledit un ou lesdits plusieurs identifiants de programme sont répertoriés par ordre alphabétique.

25. Guide électronique de prévisualisation de canaux virtuels selon l'une quelconque des revendications 17 à 23, dans lequel ledit un ou lesdits plusieurs identifiants de programme sont répertoriés dans un ordre sélectionnable par l'utilisateur.

26. Guide électronique de prévisualisation de canaux virtuels selon l'une quelconque des revendications 17 à 25, dans lequel ledit un ou lesdits plusieurs identifiants de programme représentent chacun un nom de programme d'un programme enregistré, et dans lequel ledit un ou lesdits plusieurs identifiants de canal virtuel représentent chacun un numéro de canal virtuel distinct associé à un nom de programme distinct.

27. Guide électronique de prévisualisation de canaux virtuels selon l'une quelconque des revendications 17 à 26, comprenant en outre un ou plusieurs descripteurs de programmes enregistrés qui identifient chacun une catégorie d'un programme enregistré.

28. Procédé, comprenant :
l'affectation d'une pluralité de premiers canaux virtuels distincts à chacun d'une pluralité correspondante de programmes enregistrés, dans lequel chaque premier canal virtuel présente un unique programme enregistré qui lui est associé, dans lequel chaque programme enregistré est classé selon un descripteur de programme qui décrit un genre du programme enregistré ;
la désignation d'un ou plusieurs seconds canaux virtuels en tant que canaux virtuels de groupe, chaque second canal virtuel correspondant à un groupe d'une pluralité des premiers canaux virtuels et des programmes enregistrés associés, lesdits seconds canaux virtuels incluant chacun un identifiant de groupe identifiant le second canal virtuel en qualité de canal de groupe, dans lequel chaque second canal virtuel représente un groupe correspondant à une catégorie distincte de genre de programmes ;
la génération d'un guide électronique de prévisualisation de canaux virtuels en vue d'afficher les premiers canaux virtuels distincts et les programmes enregistrés correspondants, et en vue d'afficher en outre les seconds canaux virtuels et les identifiants de groupes correspondants, dans lequel le guide électronique de prévisualisation de canaux virtuels est affiché dans le cadre d'un guide de programme qui affiche également des informations de programmation et de canal pour les canaux de diffusion ;
la réception d'un canal virtuel distinct sur chacun d'un ou plusieurs programmes enregistrés ;
la réception d'une sélection de canal virtuel d'un second canal virtuel correspondant à un groupe de premiers canaux virtuels ;
l'initiation de prévisualisations d'une pluralité de programmes enregistrés associés au groupe de premiers canaux virtuels correspondant au second canal virtuel sélectionné ; et
l'affichage des prévisualisations de la pluralité de programmes enregistrés sous la forme d'une ou plusieurs sections de chacun des programmes enregistrés, sur un écran de prévisualisation, en démarrant chaque prévisualisation de chaque programme enregistré à un point de contenu numérique du programme enregistré indiqué par au moins un marqueur de prévisualisation.

29. Procédé selon la revendication 28, dans lequel l'affectation comprend l'affectation de différents canaux virtuels à chacun d'un ou plusieurs programmes de diffusion enregistrés et à chacun d'un ou plusieurs programmes à la demande.

30. Procédé selon la revendication 28, dans lequel la génération comprend la génération du guide électronique de prévisualisation de canaux virtuels en vue d'afficher le canal virtuel supplémentaire et un identifiant de groupe du groupe d'un ou plusieurs programmes enregistrés.

31. Procédé selon l'une quelconque des revendications 28 à 30, comprenant en outre : la réception de la pluralité de programmes enregistrés qui comprend au moins un programme de diffusion enregistré et au moins un programme à la demande ; la conservation dudit au moins un programme de diffusion enregistré au moyen d'un composant de mémoire local ; et dans lequel la génération comprend la génération du guide électronique de prévisualisation de canaux virtuels, en vue d'afficher ledit au moins un programme de diffusion enregistré et ledit au moins un programme à la demande conservés au moyen d'un magasin de stockage de données de programme à distance.

32. Procédé selon l'une quelconque des revendications 28 à 30, comprenant en outre : la réception de la pluralité de programmes enregistrés qui comprend au moins un programme de diffusion enregistré et au moins un programme à la demande ; la conservation dudit au moins un programme de diffusion enregistré au moyen d'un composant de mémoire locale, et dans lequel la génération comprend la génération du guide électronique de prévisualisation de canaux virtuels, en vue d'afficher ledit au moins un programme de diffusion enregistré et ledit au moins un programme à la demande conservés par un fournisseur de programmes à la demande.

33. Procédé selon l'une quelconque des revendications 28 à 32, comprenant en outre : la réception d'un programme à la demande correspondant à une première sélection de canal virtuel ; et le rendu de la prévisualisation en tant que section du programme à la demande.

34. Procédé selon l'une quelconque des revendications 28 à 32, comprenant en outre le rendu de la prévisualisation selon une durée du programme enregistré correspondant au début du programme enregistré.

35. Procédé selon l'une quelconque des revendications 28 à 32, comprenant en outre le rendu de la prévisualisation sous la forme d'une ou plusieurs sections du programme enregistré, ladite une ou lesdites plusieurs sections étant désignées par un ou plusieurs marqueurs de prévisualisation.

36. Procédé selon l'une quelconque des revendications 28 à 32, comprenant en outre le rendu de la prévisualisation du programme enregistré ; la réception d'une entrée sélectionnable en vue d'initier le rendu du programme enregistré ; et le rendu du programme enregistré.

37. Procédé selon l'une quelconque des revendications 28 à 32, comprenant en outre : le rendu de la prévisualisation du programme enregistré ; la réception d'une entrée sélectionnable en vue d'initier le rendu du programme enregistré ; et le rendu d'un programme à la demande sous la forme du programme enregistré.

38. Procédé selon l'une quelconque des revendications 28 à 37, dans lequel la génération inclut la génération du guide électronique de prévisualisation de canaux virtuels, en vue d'afficher ledit un ou lesdits plusieurs programmes enregistrés dans l'ordre alphabétique.

39. Procédé selon l'une quelconque des revendications 28 à 38, dans lequel la génération inclut la génération du guide électronique de prévisualisation de canaux virtuels, en vue d'afficher ledit un ou lesdits plusieurs programmes enregistrés dans un ordre sélectionnable par l'utilisateur.

40. Procédé selon l'une quelconque des revendications 28 à 39, dans lequel la génération inclut la génération du guide électronique de prévisualisation de canaux virtuels en vue d'afficher, pour chacun dudit un ou desdits plusieurs programmes enregistrés, un nom de programme, un numéro de canal virtuel associé, et au moins l'un des éléments parmi une date à laquelle un programme de diffusion a été enregistré, une heure à laquelle un programme de diffusion a été enregistré, et un descripteur de programme enregistré.

41. Procédé selon l'une quelconque des revendications 28 à 40, comprenant en outre la génération d'un guide de programme qui comprend : un identifiant de programme de diffusion et un identifiant de canal de programme associé pour chacun d'un ou plusieurs programmes dont la diffusion a été programmée ; et le guide électronique de prévisualisation de canaux virtuels qui inclut un identifiant de programme enregistré et un identifiant de canal virtuel associé pour chacun dudit un ou desdits plusieurs programmes enregistrés.
